# EUROPEAN PATENT APPLICATION

(11) **EP 1 248 411 A2**
(43) Date of publication of application: **09.10.2002**
(21) Application number: 02290654.9
(22) Date of filing: 15.03.2002
(51) Int. Cl.: H04L 12/24

(54) **Method for detecting the isolation condition between agent and manager processing entities in a telecommunications network management system**

(30) Priority: 30.03.2001 IT MI010678
(71) Applicant: ALCATEL, 75008 Paris (FR)
(72) Inventor: Canali, Massimo, 20059 Vimercate (Milano) (IT); Volontè, Stefano, 20052 Monza (Milano) (IT)
(74) Representative: Colombo, Stefano Paolo

(57) **Abstract**

Described is a method for detecting the isolation condition between Agent and Manager processing entities in a telecommunications network management system using a connection-less communication protocol, that provides for detecting the isolation through the simulation of the establishment of a connection. It consists in the periodic exchange between the Manager and the Agent of a polling message sent by the Manager to the Agent and of a polling response sent by the Agent to the Manager, and in the consequent receipt check of said messages.

## Description

The present invention relates to a method for detecting the isolation condition between Agent and Manager processing entities in a telecommunication network management system, in particular utililizing a connectionless-type communication protocol.

As it is known, a telecommunication network management system comprises processing entities, hereinafter termed Agents, physically located in the network elements, and one or more processing entities, hereinafter called Manager usually having, a function of centralized control. Said Agent and Manager entities exchange information through communication protocols.

The use of communication protocols hereinafter termed as "connectionless", i.e. protocols that do not establish physical or logical connections between the various Agent and Manager entities for the exchange of information, is very common. This information is sent in the form of messages only when necessary, thus optimizing the utilization of the transmission channel resources.

In contrast, said protocol types are not free from drawbacks. A problem just arising from the lack of connection is that the check of the connection state is not performed, as instead occurs in the protocols that establish a connection (connection-oriented protocols), such as the known CMIP. Therefore, there is no way for the Agent or the Manager to be aware of the isolation condition in which the other entity (Manager or Agent) may be if, at a certain point, it becomes unreachable or inactive.

Therefore, the object of the present invention is to overcome the aforesaid drawbacks and to indicate a method for detecting the isolation condition between Agent and Manager processing entities in a telecommunication network management system, in particular utilizing a connectionless communication protocol, that provides for detecting the aforesaid isolation condition through the simulation of the establishment of a connection by means of a procedure hereinafter called "Timeout Polling".

The Timeout Polling procedure is used by both Manager and Agent to periodically check the (present) active state of the other processing entity, and consists in a periodic exchange between Manager and Agent of a response message that is sent by the Agent to the Manager, and in the consequent reception acknowledgement of said messages.

To achieve such objects, the present invention provides for a method for detecting the isolation condition between Agent and Manager processing entities in a telecommunication network management system, in particular utilizing a connectionless-type communication protocol, as well as a telecommunication network management system and a corresponding network so modified as to include said method, as best described in the claims, which form an integral part of the present description.

The method for the detection of the isolation condition according to the invention has the undoubted advantage that the aforesaid detection of the isolation condition between Agent and Manager processing entities is obtained in a simple manner, by only simulating the establishment of a connection, without actually carrying it out, by means of the Time-Out Polling procedure.

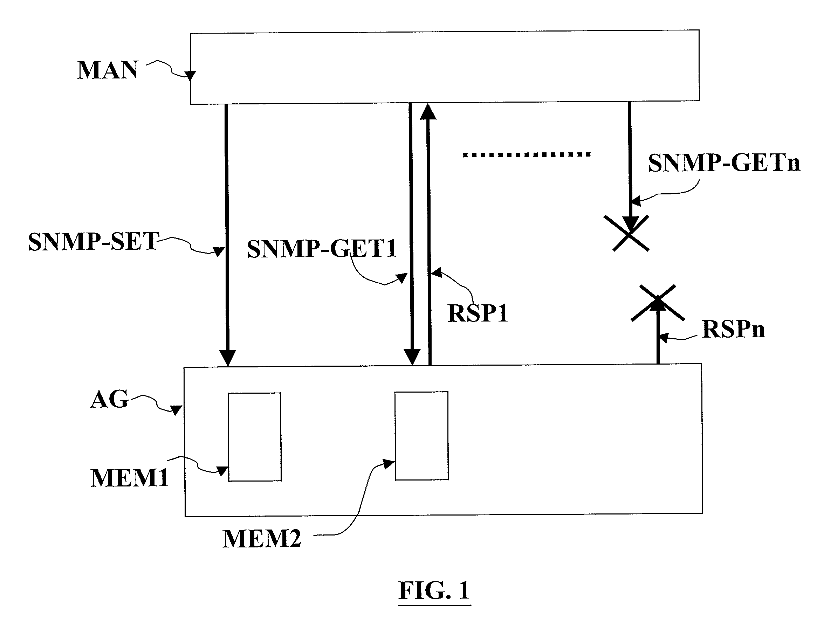

Further objects and advantages of the present invention will become clear from the following detailed description of an embodiment thereof and from the annexed drawing, merely given by way of explanation and not of limitation, wherein in Fig. 1 there is shown a basic diagram of the operation of the method for the detection of the isolation condition between Agent and Manager that is the subject matter of the present invention.

In the following there is described, also with reference to Fig. 1, the Time-Out Polling function used by both a generic Manager MAN and a generic Agent AG to periodically check the (present) active state of the other processing entity, and in the non limiting case of use of the known connectionless protocol, SNMP (Simple Network Management Protocol), and of the known programming syntax defined by the IETF (Internet Engineering Task Force) standard, for instance RFC 1905.

This syntax contemplates, for instance, the use of SET macroinstructions, for the initial procedure, described later on, of writing the parameters of the Manager MAN into memory MEM 1 of the Agent AG, and of GET ones for the Time-Out Polling procedure, through which the Manager sends a message to the Agent requesting the dispatch of events stored into memory MEM 2: the Agent sends them in the form of a response message conformed in accordance with the protocol used.

The Time-Out Polling function is used:
- by the Manager, to check the reachability of the Agent, trough a periodic request of information by means of an SNMP-GET instruction, for instance SNMP ― GET 1 in Fig. 1; this request is followed, under normal conditions, by the dispatch of information from the Agent as a response RSP1; if the Agent is not reachable or does not reply, the Manager does not receive the response, for instance RSPn in Fig. 1: when this occurs, the Manager declares the Agent as unreachable;
- by the Agent to discover a Manager disconnection: this happens when the Agent does not receive said request message, for instance SNMP - GETn in Fig. 1, for a pre-established time interval; when this occurs, the Agent declares the Manager as unreachable. As a result, the Agent starts a clearance (hereinafter referred to as "garbage collection") operation on objects already collected and, at present, useless or corrupted, through which it carries out the drop of data and operations that have lost their validity, for instance operations interrupted because of loss of connection between Manager and Agent.

As can be seen, the Manager uses the same Timeout Polling procedure to recover information concerning events, such as alarms, stored in the memory MEM 2 of the Agent.

More in detail, as far as the operating description is concerned, the Manager declares itself to the Agent, for instance in the start-up and/or reset step of the procedures upon a deactivation and isolation, by sending through an SNMP-SET macroinstruction and storing into the memory MEM1 of the Agent the information necessary for the Agent to recognize the originator of the subsequent Timeout Polling request messages.

For example, the pieces of information can be the following:
- Manager address, IP address, UDP port (this latter being optional and fixed by default: in the case of SNMP protocol, UDP port=161);
- value of Timeout, namely of the time interval normally elapsing between two consecutive Timeout Polling messages coming from the Manager;
- type of Manager, useful (even if optional) when the network typology contemplates only one Manager for each type (e.g. Element Manager, Local Craft Terminal, Remote Craft Treminal).

As a result, the Agent associates a sole key, deriving from said acknowledgement information sent by the Manager, with each Manager linked thereto especially in the case where there are more than one Manager in the network, and propagates this key in its own database to identify all information or critical resources that the Agent has to keep constant and associated with the related Manager, should this latter become unreachable: the key will be modified upon reception of new recognition information at the restart.

In the normal course of operation, the Manager, in addition to the normal management operations of the Agents, sends a Timeout Polling request message at each timeout expiration.

In the event that the Manager does not receive the Timeout Polling response (for instance SNMP-GETn and RSPn in Fig. 1), declares the Agent as disconnected. The response could be lost because of Agent or network problems: the Manager however considers the two alternatives as equivalent; in fact a misalignment between Manager and Agent occurs in both cases.

Conversely, the Agent uses the Timeout Polling request message to check which Managers are active. When the Agent does not receive the Timeout Polling request message (for instance SNMP-GETn in Fig. 1) from a given Manager for a period of time equal to or greater than the timeout period (for instance the waiting time can be twice the timeout, or adjusted at will), it declares the Manager as disconnected.

As a result, the Agent starts the "garbage collection" procedure in which it performs the following operations:
- it aborts the multistep operations in progress that are not finished at the time of disconnection, hence that have lost validity, still keeping its database consistent;
- it stops the dispatch of messages to the Manager, so as to not waste network resources for the transmission of useless messages.

Therefore, operations requested by the specific Manager, such as for instance the known EFD (Event Forwarding Discriminator), Back-up and Restore, or collection of Performance Monitoring data, are interrupted and cleared in the Agent.

The general structure of the messages exchanged between Manager and Agent , as well as message forwarding procedure, is known per se and as contemplated by the communication protocol used, for instance SNMP.

For example, the principal information contained in the event notification is the identifier of the last event generated by the Agent and the corresponding time of detection, so that the Manager is able to univocally indentify the last notification. The manager is thus able to check whether said notification does correspond to the one possibly already present in it. The related macroinstructions RSP is composed of a notification name and of the following clauses:
- Objects: it defines an ordered sequence of possible objects, and the "importance" of the event,
- Syntax sequence: it defines the data structure;
- Max-access: it defines the maximum access level for the object;
- Status: it indicates if this definition is current or supported by consistency with preceding versions;
- Description: it contains a textual definition of the meaning of the notification.

In the following a non limiting example of Manager Polling Table, Manager Polled Table, and EFD Object Description objects exchanged with the messages of the Timeout Polling procedure, is given.
A) MANAGER POLLING TABLE. This table contains information for Manager recognition, that are used for simulating a connection between Manager and Agent: every row of "Opctis IMMgr Polling InfoEntry" defines the configuration parameters for the Timeout Polling functionality of each single Manager. 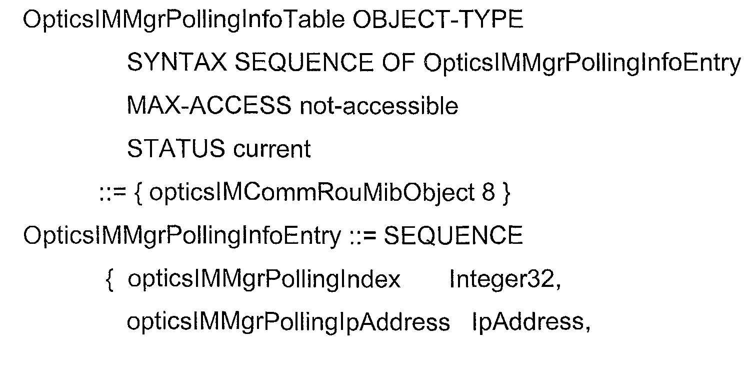 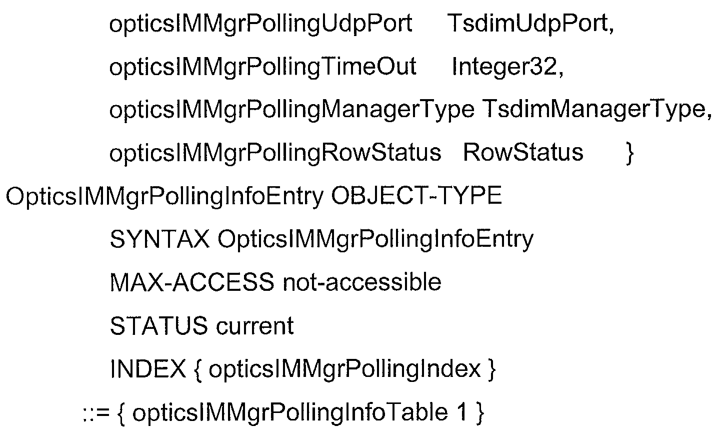
B) MANAGER POLLED TABLE - This table describes an example of information recovered by the Manager at each Polling request
   OpticslMlnfoPolledTable OBJECT-TYPE
   SYNTAX SEQUENCE OF OpticslMlnfoPolledEntry
   MAX-ACCESS not-accessible
   STATUS current
   DESCRIPTION
   "This table contains the information that managing systems will read with polling messages". 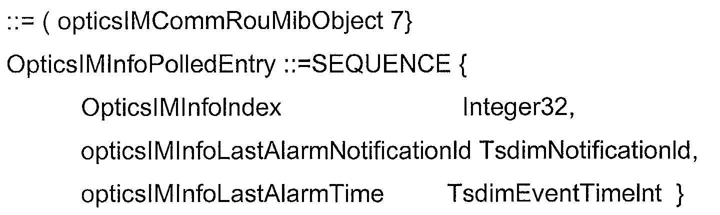
C) EFD OBJECT DESCRIPTION. This table provides an example, inside the Agent, of correlation between the Manager that carries out the Timeout Polling and the information that must be kept consistent in the event that an Agent detects a loss of connection with the Manager. The attribute "tsdim EFD Manager Index" contains the pointer to the row of the MANAGER POLLING TABLE that describes the Manager owner of the specific row in the EFD table.
   Upon loss of connection, this EFD object is blocked, through Administrative status, by the Agent at the expiring of the first Timeout and is cancelled when the second one expires.

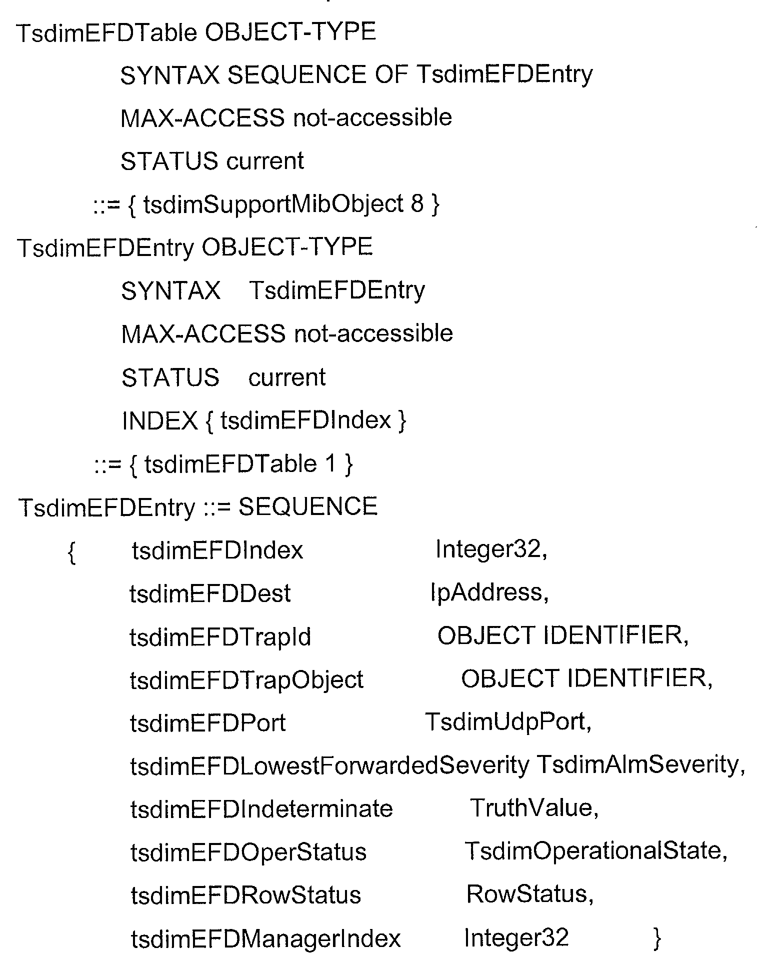

From the foregoing description it is thus apparent how one can obtain a telecommunication network management system and the related network properly modified in order to include the operations contemplated by the method for detecting the isolation condition between Agent and Manager processing entities, that is the subject matter of the invention.

From the basic knowledge and from the foregoing description the person skilled in the art is capable of realizing the subject of the invention.

The present invention may advantageously be realized by means of a computer program comprising program code means adapted to carry out one or more steps of the method when said program is run on a computer. Therefore the scope is intended to be extended to such a computer program as well as to a computer-readable medium having a message recorded thereon, said computer-readable medium comprising program code means adapted to carry out one or more steps of the method when said program is run on a computer.

Many changes, modifications, varations of the present invention will become apparent to those skilled in the art having considered the present description and the annexed drawings illustrating a preferred embodiment thereof. All of such changes, modifications, variations that do not depart from the spirit and the scope of the invention are considered as covered by the invention.

## Claims

1. Method for detecting the isolation condition between Agent and Manager processing entities in a telecommunication network management system using a connectionless-type communication protocol between Agent and Manager **characterized in that** it provides for a step of periodically exchanging, between Manager and Agent, request messages (SNMP - GET) sent by the Manager to the Agent and response messages (RSP) sent by the Agent to the Manager, and for the consequent reception check of said messages, said Agent or Manager regarding , in the negative, the other processing entity as isolated and unreachable.

2. Method according to claim 1, **characterized in that** said reception check is carried out after a time greater or equal to the period of said periodic exchange.

3. Method according to claim 1, **characterized in that** said request message (SNMP - GET) is an information request message on events stored in the Agent, said events being sent to the Manager through said response message (RSP).

4. Method according to claim 1, **characterized in that** it comprises a further step of declaration by the Manager to the Agent, that occurs during the start-up and/or restart step upon an isolation, wherein the Manager sends recognition information to the Agent that stores them and uses them to identify the information related to said Manager, even in the event of isolation of this latter and up to the reception of new recognition information at the restart.

5. Method according to claim 4, **characterized in that** said recognition information comprises the Manager's address and the value of said exchange period.

6. Method according to claim 1, **characterized in that** upon a negative reception check, said Agent starts an internal procedure of erasing data and operations that have lost validity, for instance multi-step operations interrupted because of the loss of connection between Manager and Agent, and stops the dispatch of messages to the Manager.

7. Telecommunication network management system, **characterized in that** it comprises means for the realization of a method for the detection of the isolation condition between Agent and Manager processing entities as in any of claims 1 to 6.

8. Telecommunications network **characterized in that** it comprises a management system as in claim 7.

9. Computer program comprising program code means designed to carry out the steps of claims 1 to 6 when said program is run on a computer.

10. Computer-readable medium having a message recorded thereon, said computer-readable medium comprising program code means designed to carry out the steps of claims 1 to 6 when said program is run on a computer.
